(19) Europäisches Patentamt
European Patent Office
Office européen des brevets

(11) **EP 2 226 425 B1**

(12) **EUROPEAN PATENT SPECIFICATION**

(45) Date of publication and mention
of the grant of the patent:
**28.12.2011 Bulletin 2011/52**

(21) Application number: **10000698.0**

(22) Date of filing: **25.01.2010**

(51) Int Cl.:
*D21H 13/38* (2006.01)   *B01D 46/00* (2006.01)
*B01D 46/24* (2006.01)   *C03B 37/00* (2006.01)
*C03C 13/00* (2006.01)   *C03C 13/04* (2006.01)
*C03C 25/68* (2006.01)   *C04B 35/622* (2006.01)
*D01F 9/08* (2006.01)   *D04H 13/00* (2006.01)
*F01N 3/28* (2006.01)

(54) **Mat material, exhaust gas treating apparatus, and method of manufacturing mat material**

Mattenmaterial, Abgasbehandlungsvorrichtung und Verfahren zur Herstellung von Mattenmaterial

Matériau en nappe, appareil de traitement de gaz d'échappement, et procédé de fabrication de ce matériau en nappe.

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.01.2009 JP 2009014186**

(43) Date of publication of application:
**08.09.2010 Bulletin 2010/36**

(73) Proprietor: **Ibiden Co., Ltd.**
**Ogaki-shi, Gifu 503-8604 (JP)**

(72) Inventors:
• **Sugino, Junichi**
**Takahama-shi**
**Aichi 444-1301 (JP)**
• **Yamazaki, Tsutomu**
**Takahama-shi**
**Aichi 444-1301 (JP)**

(74) Representative: **HOFFMANN EITLE**
**Patent- und Rechtsanwälte**
**Arabellastraße 4**
**81925 München (DE)**

(56) References cited:
EP-A1- 1 267 048      EP-A2- 0 186 128
WO-A1-00/76660      GB-A- 821 362
GB-A- 1 156 276      US-A- 3 356 563
US-A- 4 063 001      US-A- 4 933 307
US-A1- 2007 231 222   US-B1- 6 231 818

**Description**

BACKGROUND OF THE INVENTION

1. Field of the Invention

The present invention generally relates to a mat material containing inorganic fibers, an exhaust gas treating apparatus, and a method of manufacturing a mat material. Particularly, the present invention relates to a mat material used in an exhaust gas treating apparatus for automobiles and the like.

2. Description of the Related Art

The number of automobiles is increasing at growing rates worldwide, and the amount of exhaust gas emitted by the internal combustion engines of those vehicles is also increasing. Particularly, substances contained in diesel engine exhaust gas are known to cause various pollution problems, and are already having a serious impact on global environment. Under these circumstances, various exhaust gas treating apparatuses have been proposed and some have been put to practical use.

A typical exhaust gas treating apparatus may consist of a tubular member (casing) disposed in the flow of exhaust gas in an exhaust pipe connected to the exhaust gas manifold from the engine. The tubular member has openings for an exhaust gas inlet and an outlet, and contains an exhaust gas treating body having a number of fine holes or pores. Examples of such an exhaust gas treating body include a catalyst carrier and an exhaust gas filter, such as a diesel particulate filter (DPF).

For example, in the case of a DPF having the aforementioned structure, the exhaust gas enters the exhaust gas treating body via its inlet opening and exits via its outlet opening, wherein particles in the exhaust gas are trapped on the surrounding walls of the pores and are thus removed from the exhaust gas.

Normally, between such an exhaust gas treating body and the casing, a retain/seal material is installed. The retain/seal material is used to prevent damage to the exhaust gas treating body due to its contact with the casing during the movement of the vehicle, and also to prevent leakage of exhaust gas via a gap between the casing and the exhaust gas treating body. The retain/seal material also has the function of preventing the exhaust gas treating body from being detached by the exhaust gas pressure. The retain/seal material is required to have a sufficient heat insulation capacity because it is exposed to the high temperatures required for maintaining the reactivity of the exhaust gas treating body. Such requirements are met by a mat material containing inorganic fibers.

In one example, the mat material, as a retain/seal material, is wound at least partially around the outer peripheral surfaces of the exhaust gas treating body except for its openings, and is integrally fixed to the exhaust gas treating body by taping and the like. Thereafter, the integrally assembled components are press-fitted within the casing of an exhaust gas treating apparatus.

Generally, such mat material includes inorganic fibers and an organic binder, and is manufactured by a needling process or a paper-making method. Recently, it has been proposed to use glass fibers, such as E-glass fibers, as the inorganic fibers contained in the mat material in order to reduce the organic binder content, as discussed in Japanese Laid-Open Patent Application No. 2006-516043 ("Patent Document 1"). However, a mat material containing glass fibers such as mentioned above has a relatively low heat resistance.

US 3,356,563 relates to a method of making a coiled package of leached glass fibres without the use of protective film forming materials and without breakage during gathering, coiling, and firing by wetting the filaments with water at forming, controlling the speed, tension, and crossover angle to prevent breakage and then subjecting the package to leaching, washing, and firing.

EP 0 186 128 describes porous and nonporous, alkaline tolerant, solid silica-rich fibres which are produced from forming glass fibres of an aluminium borosilicate composition having extractable components and non-extractable components comprising silica and one or more metal oxides from a metal of group IV of the Periodic Chart, and extracting the extractable components with or without heat treating the glass fibres.

GB 1,155,276 relates to high silica content materials and methods of manufacture thereof.

GB 821,362 relates to a process of producing temperature-resistant fibrous mats.

US 4,063,001 relates to acid resistant glass fibres which are prepared by treating the surface of a siliceous glass fibre with an aqueous acid solution to increase the silica content thereof.

WO 00/76660 A1 relates to a fibre glass carrier having a high surface area for use as a carrier for photo-active materials such as photocatalyst materials and photovoltaic materials. US 4,933,307 relates to porous, silica-rich shapes having improved strength and abrasion resistance by leaching the precursor glass shape in preconditioned acid having silica ion and at least one common ion that is also present in the precursor glass shape.

Generally, the exhaust gas treating body in an exhaust gas treating apparatus is exposed to repeated cycles of expansion and contraction loads due to the increase and decrease in the temperature in the exhaust gas treating body caused by the periods of presence and absence of the flow of exhaust gas. Thus, the retain/seal material during its use is subject to repeated compression/recovery loads in step with the expansion/contraction behavior of the exhaust gas treating body. In the case of a mat material utilizing glass fibers, such repeated cycles of compression and recovery of the retain/seal material adversely affects its retaining force. The decrease in retaining force of the retain/seal material (mat material) may result in the falling off of the exhaust gas treating body from the retain/seal material.

Thus, there is a need for a mat material capable of maintaining a sufficient retaining force even after the mat material is subjected to compression/recovery loads repeatedly, and a method of manufacturing such a mat material. There is also a need for an exhaust gas treating apparatus having such mat material as its retain/seal material.

## SUMMARY OF THE INVENTION

In one aspect of the present disclosure, a mat material includes a plurality of inorganic fibers. At least some of the inorganic fibers include a core portion and a surface layer surrounding the core portion, the surface layer having a higher silica ($SiO_2$) content than the core portion. According to the invention, the surface layer contains 90wt% or more of silica ($SiO_2$).

In another aspect of the present disclosure, an exhaust gas treating apparatus includes an exhaust gas treating body; a retain/seal material wound around the exhaust gas treating body; and a cylindrical member in which the exhaust gas treating body with the retain/seal material wound around it is housed. The retain/seal material includes the mat material according to the aforementioned first aspect.

In yet another aspect of the present disclosure, a method of manufacturing a mat material containing inorganic fibers includes the steps of (A) preparing glass fibres containing silica ($SiO_2$) and subsequently forming the inorganic fibers having a core portion and a surface layer surrounding the core portion, the surface layer having a higher silica ($SiO_2$) content than the core portion; (B) preparing a laminated sheet from the inorganic fibers formed in step (A); and (C) forming a mat material from the laminated sheet by a needling process.

In yet another aspect of the present disclosure, a method of manufacturing a mat material containing inorganic fibers includes the steps of (A) preparing glass fibres containing silica ($SiO_2$) and subsequently forming the inorganic fibers having a core portion and a surface layer surrounding the core portion, the surface layer having a higher silica ($SiO_2$) content than the core portion; (B) preparing a slurry from the inorganic fibers formed in step (A); and (C) forming a mat material from the slurry by a paper-making method.

## BRIEF DESCRIPTION OF THE DRAWINGS

Other objects, features and advantages of the present invention will become apparent upon consideration of the specification and the appendant drawings, in which:

FIG. 1 is a schematic perspective view of a mat material according to an embodiment of the present invention;
FIG. 2 illustrates how an exhaust gas treating apparatus may be assembled using the mat material of the embodiment of FIG. 1;
FIG. 3 is a schematic cross section of an inorganic fiber contained in the mat material of the embodiment of FIG. 1;
FIG. 4 illustrates a structure of an exhaust gas treating apparatus according to an embodiment of the present invention;
FIG. 5 is a flowchart of a method of manufacturing a mat material according to an embodiment of the present invention;
FIG. 6 is a flowchart of a method of manufacturing a mat material according to another embodiment of the present invention; and
FIG. 7 illustrates a cycle testing apparatus.

## DETAILED DESCRIPTION OF THE PREFERRED EMBODIMENTS

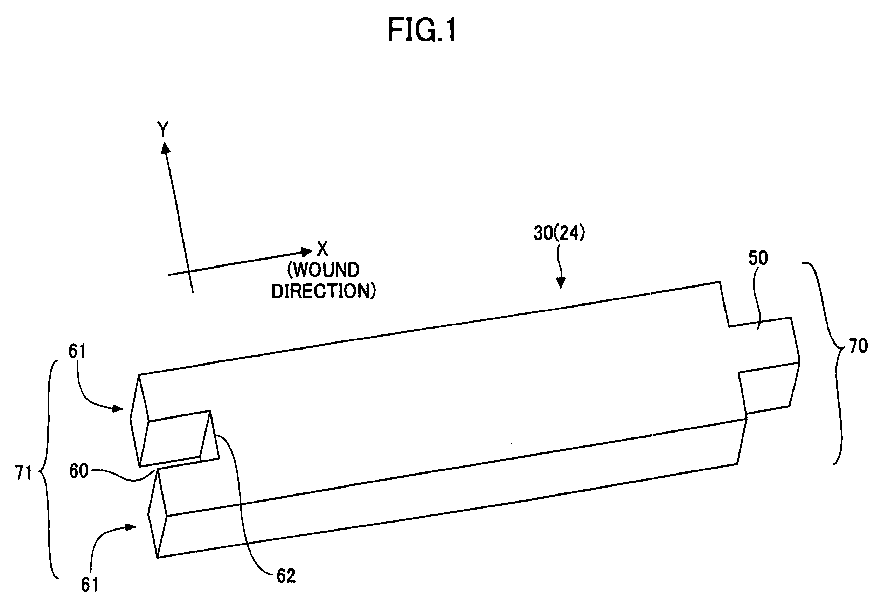

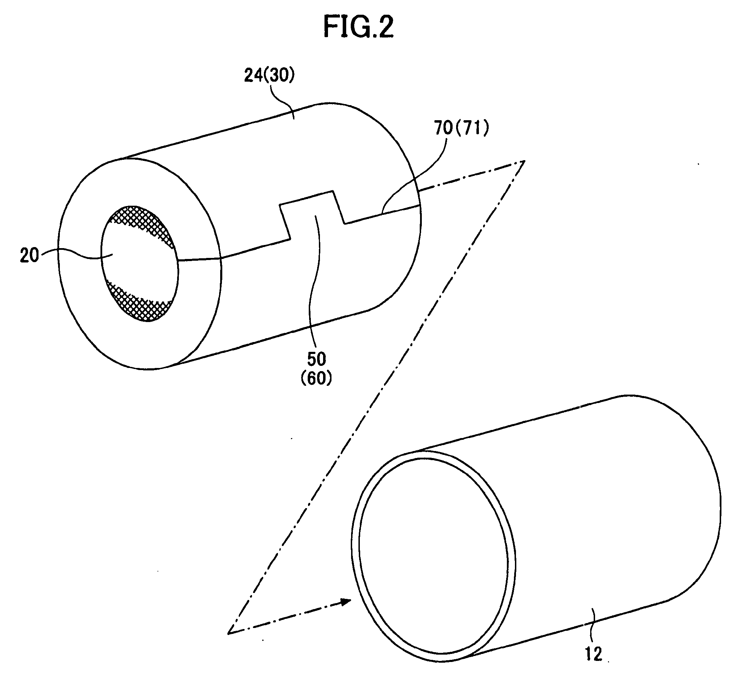

In the following, embodiments of the present invention are described with reference to the drawings. FIG. 1 is a schematic perspective view of a mat material 30 according to an embodiment of the present invention. FIG. 2 is a perspective view illustrating how an exhaust gas treating apparatus is assembled according to an embodiment of the present invention, using the mat material of FIG. 1 as a retain/seal material.

Referring to FIG. 1, the mat material 30 has a substantially rectangular shape having longer sides parallel to an X direction and shorter sides 70 and 71 parallel to a Y direction. The shorter side 70 has a projecting portion 50, and the shorter side 71 has a recess portion 60. The portions of the mat material 30 at the shorter side 71 adjacent the recess portion 60 form two projecting portions 61. The shapes of the shorter sides 70 and 71 of the mat material 30 depicted in FIG. 1 are merely examples. In other embodiments of the present invention, the shorter sides of the mat material may not have any projections or recesses, or each shorter side may have a plurality of the projecting portions 50 or the recess portions 60. In the present disclosure, the term "substantially rectangular shaped" may also include a shape of the mat material where a longer side and a shorter side form a corner having an angle other than 90 (such as a round corner).

The mat material 30, when it is used as a retain/seal material 24 according to the present embodiment, is wound so that its longer side direction lies in the X direction in FIG. 1. When the mat material 30 as the retain/seal material 24 is wound around an exhaust gas treating body 20, which may include a catalyst carrier, as depicted in FIG. 2, the projecting portion 50 is fitted in the recess portion 60, and then the mat material 30 is fixed on the exhaust gas treating body 20. Thereafter, the exhaust gas treating body 20 with the retain/seal material 24 wound around it may be press-fitted inside a tubular casing 12, which may be made of a metal.

Generally, a mat material for the above-discussed purposes includes inorganic fibers and an organic binder. For example, Patent Document 1 discloses that glass fibers (such as E-glass fibers) are used as inorganic fibers in a mat material. However, such mat material containing glass fibers has a relatively low heat resistance. Further, an exhaust gas treating body in an exhaust gas treating apparatus is subjected to repeated cycles of expansion/contraction due to the increase and decrease in temperature caused by the periods of presence and absence of the flow of exhaust gas through the exhaust gas treating body. Thus, the retain/seal material in use is subject to repeated cycles of compression and recovery loads in step with the expansion/contraction behavior of the exhaust gas treating body. When the mat material containing glass fibers is subjected to such compression/recovery cycles, the retaining force of the mat material significantly decreases. The decrease in retaining force of the mat material may lead to the falling off of the exhaust gas treating body from the mat material.

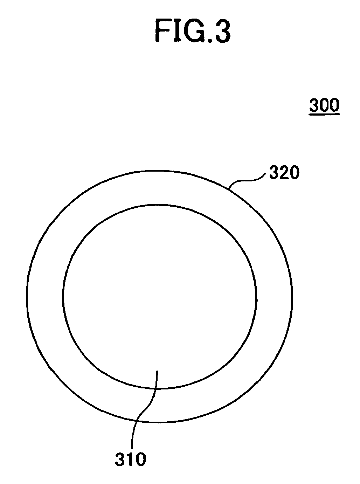

In contrast, in accordance with the present embodiment, the mat material 30 includes inorganic fibers each of which having at least two layers. The two layers include a core portion containing silica ($SiO_2$), and a surface layer that surrounds the core portion and that has a greater silica ($SiO_2$) content than the core portion. FIG. 3 is a schematic cross section of a single inorganic fiber 300 (hereafter referred to as a "two-layer structured inorganic fiber") according to the present embodiment. In this example, the two-layer structure inorganic fiber 300 has a core portion 310 containing silica ($SiO_2$) and a surface layer 320 also containing silica ($SiO_2$) but in a greater content than the core portion 310. Preferably, the surface layer 320 has a silica ($SiO_2$) content equal to or more than 90 wt%. Preferably, the two-layer structure inorganic fiber 300 as a whole has an average silica ($SiO_2$) content (which is the content of silica ($SiO_2$) when no distinction is made between the core portion and the surface layer) equal to or more than 60 wt% and less than 100%.

The two-layer structure inorganic fiber 300 may have a diameter ranging from 8 $\mu$m to 12 $\mu$m. It is very difficult to actually see the cross-sectional structure of such a fine two-layer structure inorganic fiber as illustrated in FIG. 3. The actual formation of the two-layer structure of the inorganic fiber may be confirmed by a EPMA line analysis of a cross section of the two-layer structure inorganic fiber. Specifically, it may be determined that the two-layer structure as depicted in FIG. 3 is formed when an analysis result indicates that the concentration of silica ($SiO_2$) at portions corresponding to the upper surface of the inorganic fiber (i.e., at its opposite points in the cross section) is higher than at other portions. The silica ($SiO_2$) content of the surface layer 320 may be measured by a method involving externally irradiating the inorganic fiber with a probe beam (such as an electron beam or an X-ray beam). The average silica ($SiO_2$) content of the two-layer structure inorganic fiber 300 as a whole may be measured by a conventional analysis method, such as the fluorescent X-ray method or a method involving dissolving a predetermined amount of all the inorganic fibers, adding an oxidant to the molten fibers in order to precipitate silica ($SiO_2$) alone, and measuring the weight of the precipitated silica.

Characteristic effects of the mat material according to the present embodiment are described. Generally, silica ($SiO_2$) is known as a material having better heat resistance than glass, such as the aforementioned E-glass. In the mat material 30 according to the present embodiment, the upper surface of the two-layer structure inorganic fibers 300 is coated with the surface layer 320, which contains a large amount of silica ($SiO_2$). Thus, the mat material 30 of the present embodiment has significantly improved heat resistance over mat materials using conventional glass fibers.

Furthermore, the mat material 30 containing the two-layer structure inorganic fibers 300 has a low rate of decrease in retaining force ("retaining force decrease rate") after repeated cycles of compression and recovery at high temperatures, as will be described later. Although the reason for such a low retaining force decrease rate is not yet fully understood, the current assumption is as follows. Silica ($SiO_2$) is characterized by its relatively low coefficient of thermal expansion compared with other ceramics materials. Thus, in the two-layer structure inorganic fibers 300 according to the present embodiment, it is likely that the core portion 310 has a greater coefficient of thermal expansion than the surface layer portion 320. For example, when the core portion 310 is made of E-glass and the surface layer 320 is made of silica ($SiO_2$), the coefficient of thermal expansion of the core portion 310 will be on the order of $5.5 \times 10^{-6}$/°C, whereas the coefficient of thermal expansion of the surface layer 320 will be on the order of $0.5 \times 10^{-6}$/°C.

In this case, in a high temperature environment, compression stress develops in the surface layer 320 of the two-layer structure inorganic fibers 300 while tensile stress develops in the core portion 310. Such inorganic fibers are less likely to be damaged or splintered when stress load is applied to the fibers repeatedly in a high temperature environment, thus reducing the retaining force decrease rate of the two-layer structure inorganic fibers 300 after its repeated compression and recovery.

The above is merely an inference concerning the behavior of the materials used in accordance with the present embodiment. The same effect of the present embodiment (i.e., the decrease in retaining force decrease rate after repeated compression and recovery) of the mat material may be obtained by other principles. Thus, the mat material of the present embodiment does not easily lose its retaining force in an environment where the mat material is subjected to repeated compression and recovery loads at high temperature, and can therefore provide a stable retaining force for a long time.

Generally, silica ($SiO_2$) fiber is inferior to other inorganic material fibers in terms of strength (tensile strength). However, in accordance with the present embodiment, the higher silica ($SiO_2$) content is limited to the surface layer 320 of the inorganic fibers, and the silica ($SiO_2$) content of the core portion 310 is lower than that of the surface layer 320. Thus, the decrease in strength (tensile strength) of the inorganic fibers due to the use of silica ($SiO_2$) is minimized. In the following, components of the mat material 30 are described in greater detail.

(Inorganic fibers)

In accordance with the present embodiment, the core portion 310 of the two-layer structure inorganic fibers 300 contained in the mat material 30 may be made of any material as long as the silica ($SiO_2$) content of the core portion 310 is less than that of the surface layer 320. The core portion 310 may be made of glass, such as E-glass, S-glass, or S2-glass. "E-glass" is a general term for glass containing 52 wt% to 56 wt% of silica ($SiO_2$), 12 wt% to 16 wt% of aluminum oxide ($Al_2O_3$), a maximum of 6 wt% of magnesium oxide (MgO), 5 wt% to 10 wt% of boron oxide ($B_2O_3$), and 16 wt% to 25 wt% of calcium oxide (CaO). "S-glass" is a general term for glass containing 65 wt% of silica ($SiO_2$), 25 wt% of aluminum oxide ($Al_2O_3$), and 10 wt% of magnesium oxide (MgO).

The surface layer 320 contains more silica ($SiO_2$) than the core portion 310 does. The silica ($SiO_2$) content of the surface layer 320 may be equal to or more than 90 wt%. The surface layer 320 may further contain aluminum oxide ($Al_2O_3$).

(Organic binder)

The mat material 30 of the present embodiment may further contain an organic binder. Examples of the organic binder include epoxy resin, acrylic resin, rubber resin, and styrene resin. For example, the organic binder is made of an acrylic rubber (ACM), acrylonitrile-butadiene rubber (NBR), or styrene-butadiene rubber (SBR). The organic binder content (i.e., the weight of the organic binder relative to the total weight of the mat material) may be in a range from 1.0 wt% to 10.0 wt%. If the mat material 30 is impregnated with the organic binder, the amount of organic components discharged out of the exhaust gas treating apparatus in use equipped with the mat material may increase. Thus, it is preferable not to impregnate the mat material with the organic binder.

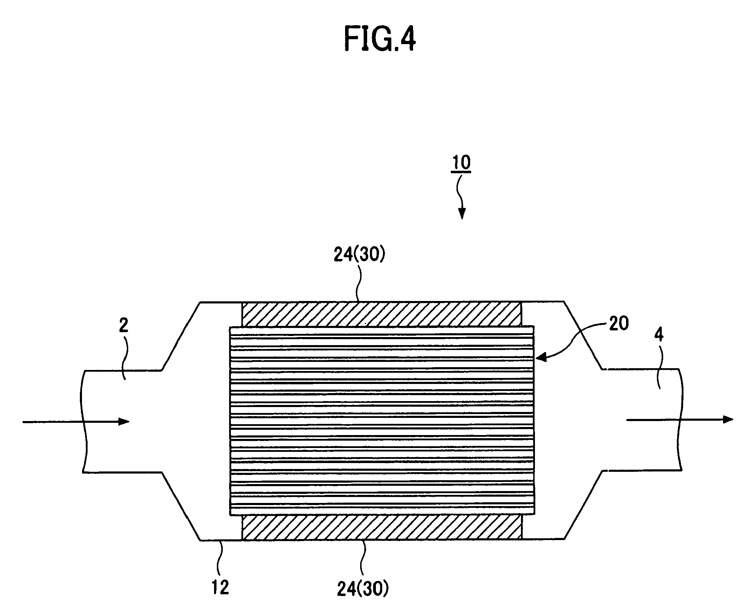

FIG. 4 illustrates an exhaust gas treating apparatus 10 in which the mat material 30 according to the present embodiment is used as a retain/seal material. The exhaust gas treating apparatus 10 includes the exhaust gas treating body 20 with the retain/seal material 24 wound around an outer peripheral surface of the exhaust gas treating body 20; a casing 12 in which the exhaust gas treating body 20 is housed; an exhaust gas inlet pipe 2 connected to the inlet side of the casing 12; and an outlet pipe 4 connected to the outlet side of the casing 12. The inlet pipe 2 and the outlet pipe 4 are each tapered, with their diameter increasing and reaching a maximum where they are connected to the casing 12. The exhaust gas treating body 20 has an exhaust gas inlet surface and an exhaust gas outlet opening surface. The exhaust gas treating body 20 includes a number of through-holes whose walls extend in a direction parallel to the flow of gas, thus forming a catalyst carrier. The catalyst carrier may be made of a honeycomb of porous silicon carbide. The structure of the exhaust gas treating apparatus 10 depicted in FIG. 4 is merely an example. In another embodiment, the exhaust gas treating body 20 may form a diesel particulate filter (DPF) in which some of the through-holes may be closed.

In the exhaust gas treating apparatus 10 depicted in FIG. 4, the mat material 30 containing the two-layer structure inorganic fibers 300 according to the present embodiment is used as the retain/seal material 24. Thus, the retain/seal material 24 of the exhaust gas treating apparatus 10 has improved heat resistance, allowing the exhaust gas treating apparatus 10 to be used in a wide range of exhaust gas temperatures, such as between 200°C and 600°C.

Further, in the exhaust gas treating apparatus 10, the rate of decrease in retaining force of the retain/seal material 24 due to the repeated application of compression/recovery loads to the retain/seal material 24 is minimized. Such compression/recovery loads are caused by the periods of presence and absence of the passage of exhaust gas through the exhaust gas treating apparatus 10. Thus, the shifting of the exhaust gas treating body 20 from its predetermined position after a long period of use can be prevented, thereby significantly increasing the reliability of the exhaust gas treating apparatus 10.

(Method of manufacturing mat material)

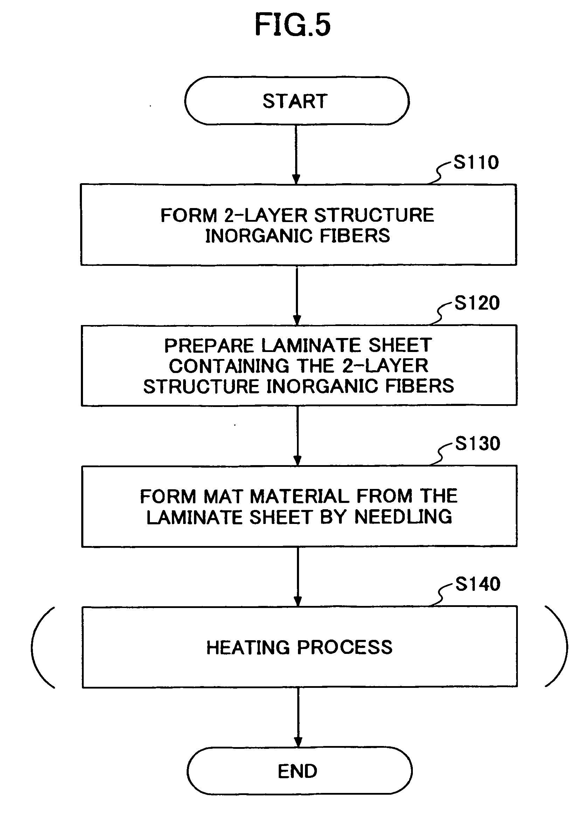

With reference to FIG. 5, a method of manufacturing the mat material according to the present embodiment is described. FIG. 5 is a flowchart of the manufacturing method, which includes the following steps:

(A) forming the two-layer structure inorganic fibers having the aforementioned characteristics (S110);
(B) preparing a laminated sheet using the two-layer structure inorganic fibers (S120); and
(C) forming a mat material from the laminated sheet by a needling process (S130).

Optionally, the method may further include the step of:

(D) heating the resultant two-layer structure inorganic fibers between steps S110 and S120, or the resultant mat material after step S130 (S140).

In the above method, the mat material is formed by the so-called "needling process", which is a general term for methods which involve piercing a laminated sheet containing inorganic fibers with needles repeatedly.

(Step S110)

The two-layer structure inorganic fibers described above are made. The method of manufacturing the two-layer structure inorganic fibers is not particularly limited. In the following example, the two-layer structure inorganic fibers are made using glass fibers containing silica ($SiO_2$) as a base material.

First, glass fibers containing silica ($SiO_2$) are prepared. The glass fibers may be prepared from E-glass, S-glass, or S2-glass having the aforementioned compositions. The length of the glass fibers is not particularly limited. Preferably, however, the glass fibers should be long enough that they can be readily tangled with one another during the needling process in a later stage. The glass fibers may have an average length ranging from 50 mm to 100 mm. The "average length" is an average length of 100 randomly selected fibers, for example.

The diameter of the glass fibers is not particularly limited. They may have an average diameter ranging from 8 $\mu$m to 12 $\mu$m. The "average diameter" is an average value of the diameters of 300 randomly selected fibers measured by SEM (scanning electron microscopy), for example. The glass fibers are then subjected to an acid treatment in order to selectively dissolve components of the glass fibers other than silica ($SiO_2$), so that a surface layer is formed in which the silica ($SiO_2$) content is greater than in a central portion. As a result, the two-layer structure inorganic fibers having a glass fiber core portion and a surface layer of the remaining silica ($SiO_2$) is formed.

The acid treatment may involve immersing the glass fibers in a solution containing an acid, such as hydrochloric acid. The temperature and duration of the acid treatment are not particularly limited, as long as the inorganic fibers of the at least two-layer structure having a glass fiber core portion and a surface layer with the increased silica ($SiO_2$) content can be obtained. Thus, the acid treatment may be conducted at a temperature in a range from room temperature to 90°C, for a duration ranging from 1 to 24 hours.

Thereafter, the resultant two-layer structure inorganic fibers are washed with water and then dried by, e.g., retaining the two-layer structure inorganic fibers at a temperature ranging from 100°C to 200°C.

(Step S120)

A fiber opening process is performed on the two-layer structure inorganic fibers to form a cottony laminated sheet. The fiber opening process may be performed by carding, which involves forming a web of nonwoven fabric. A number of such webs can then be laminated to form a laminated sheet.

(Step S130)

A needling process is performed to form a mat material from the laminated sheet. Normally, the needling process is performed using a needling apparatus. A typical needling apparatus includes a needle board movable in piercing directions (which are normally vertical directions) in a reciprocating manner; and a pair of support plates disposed on an upper surface side and a lower surface side of the laminated sheet. The needle board has a number of needles for piercing the laminated sheet. The density of the needles on the needling board may range from 25 to 5000 needles per 100 cm$^2$. Each support plate has a number of through-holes for the needles. The needle board is repeatedly moved toward and away from the laminated sheet, which is pressed from either side by the pair of support plates, whereby the needles pierce the laminated sheet repeatedly, forming a mat material in which the inorganic fibers are interlaced.

In another example, the needling apparatus may have two needle boards. In this example, one needle board is disposed on the upper surface side and the other needle board is disposed on the lower surface side of the laminated sheet, which is fixed from either side by the support plates. The needle boards have their needles arranged so that the group of needles of the one needle board do not coincide in position with the group of needles of the other needle board during the needling process. Further, the support plates have the through-holes arranged in light of the arrangement of the needles of both the needle boards so that none of the needles hit the support plates when the laminated sheet is needled from both sides. Such a method may be able to reduce the needling process time.

(Step S140)

The mat material is subjected to a heating process as needed. When the method of forming the two-layer structure inorganic fibers involves an acid treatment of the glass fibers as mentioned above, improved chemical resistance of the two-layer structure inorganic fibers and eventually the mat material can be obtained by subjecting the resultant two-layer structure inorganic fibers to the heating process. This may be because the heating process increases the density of the surface layer of the two-layer structure inorganic fibers. The heating process may be performed at temperatures ranging from 400°C to 800°C. The heating process for the mat material is not necessarily performed at this step. For example, it may be performed between steps S110 and S120.

Generally, in order to enhance the handling of the mat material, the resultant mat material is impregnated with an organic binder of a resin and the like, such as those mentioned above. The organic binder may not necessarily be added. Finally, the mat material manufactured as described above by way of example is cut into a predetermined shape (such as depicted in FIG. 1), thus obtaining the mat material according to the present embodiment of the present invention.

(Second method of manufacturing mat material)

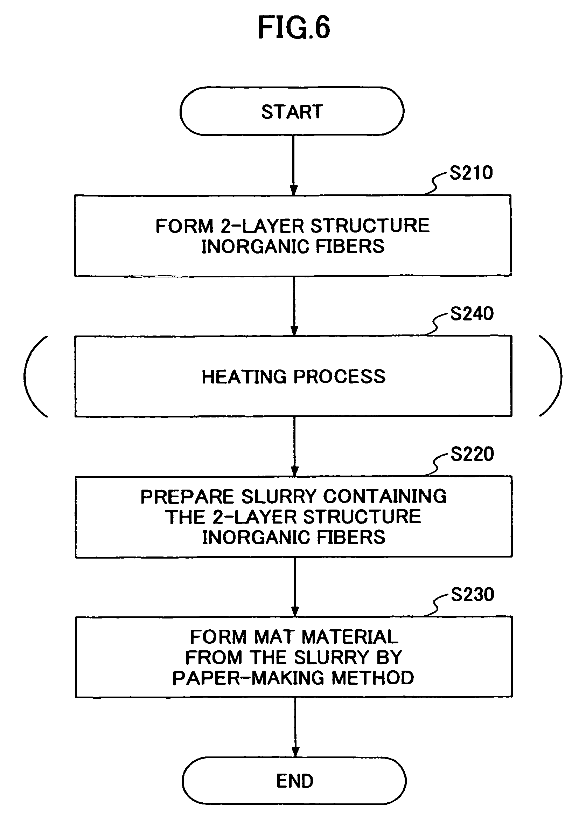

FIG. 6 is a flowchart of a second method of manufacturing the mat material according to the present embodiment. The second manufacturing method includes the steps of:

(A) forming the two-layer structure inorganic fibers having the aforementioned characteristics (S210);
(B) preparing a slurry using the two-layer structure inorganic fibers (S220); and
(C) forming a mat material from the slurry by a paper-making method (S230).

Optionally, the method may further include the step of:

(D) heating the resultant two-layer structure inorganic fibers between steps S210 and S220, or the resultant mat material after step S230 (S240).

In this method, the mat material is manufactured by the so-called paper-making method. The paper-making method is a general term for methods of obtaining a mat material by pouring a slurry of inorganic fibers into a paper-making mold and then dehydrating the paper-making mold by suction, for example.

In the following, the above steps are described in detail.

(Step S210)

The two-layer structure inorganic fibers are formed in substantially the same way as in step S110 of the above-described needling process. Although the length of the glass fibers is not particularly limited, it is preferable in this method that their length be relatively short. The average length of the glass fibers may be in a range from 3 mm to 15 mm. The average diameter of the glass fibers may be in a range from 8 $\mu$m to 12 $\mu$m.

(Step S220)

A slurry is prepared using the two-layer structure inorganic fibers obtained in step S210. First, a predetermined amount of the two-layer structure inorganic fibers prepared by the aforementioned method and an organic binder are mixed with water. To the mixture may be further added an inorganic binder and/or a flocculating agent. Examples of the inorganic binder include an alumina sol and a silica sol. An example of the organic binder is latex. The organic binder content is preferably equal to or less than 20 wt%. If the organic binder content exceeds 20 wt%, the amount of organic components discharged out of the exhaust gas treating apparatus in use may significantly increase. The resultant mixture is then stirred in a mixer, such as one in a paper-making machine, thereby obtaining a slurry of opened fibers. Typically, such stirring is performed for 20 to 120 seconds.

(Step S230)

A mat material is manufactured from the obtained slurry by a paper-making method. First, the slurry is introduced into a mold, which may have fine openings at the bottom. A dehydrating process is then performed by which water content is suctioned from below the mold using a suction device and the like, thereby obtaining a raw-material mat having a predetermined shape.

The raw-material mat is then compressed using a pressing device and the like, heated at a predetermined temperature, and then dried, thereby obtaining a mat material. The sheet density after the compressing process may be on the order of 0.10 g/cm$^3$ to 0.40 g/cm$^3$. The heating/drying process may involve placing the raw-material mat in a heater, such as an oven, and heating the mat to a temperature in a range from 90°C to 180°C for 5 to 60 minutes.

(Step S240)

Although the mat material according to the present embodiment can be obtained by the above-described process, the method may further include heating the two-layer structure inorganic fibers between steps S210 and S220. By so doing, chemical resistance of the two-layer structure inorganic fibers and eventually the mat material can be further increased, as mentioned above. However, in the second method, the heating process is not necessarily performed at this stage. Instead, the heating process may be performed after step S230.

Examples

(Example 1)

E-glass fibers having an average diameter of 9 $\mu$m and an average length of 75 mm were prepared and subjected to an acid treatment. The acid treatment involved immersing the E-glass fibers in 1N hydrochloric acid at 60°C for 20 minutes. As a result, the two-layer structure inorganic fibers having a surface layer with a high silica ($SiO_2$) content and a core portion of E-glass were obtained. The formation of the two-layer structure inorganic fibers was confirmed by EPMA line analysis. The silica ($SiO_2$) content in the surface layer of the two-layer structure inorganic fibers as measured by EDS (Energy Dispersive X-ray Spectrometry) analysis was 94.48 wt%.

Further, average contents of representative components contained in the two-layer structure inorganic fibers as a whole (i.e., when the core portion and the surface layer are not distinguished) were analyzed. $SiO_2$, $Al_2O_3$, MgO, and CaO were analyzed by the fluorescent X-ray method after melting and solidifying the two-layer structure inorganic fibers as a whole using a flux ($Li_2B_4O_7$). $B_2O_3$ was analyzed by ICP (inductively-coupled plasma) optical emission spectrometry.

Table 1 shows a result of analysis of the individual components. Table 1 also shows the contents of representative components of the E-glass fibers prior to acid treatment for reference purposes.

Table 1

| Component | 2-layer inorganic fibers (wt%) | E glass fibers (wt%) |
| --- | --- | --- |
| $SiO_2$ | 65.6 | 54.5 |
| $Al_2O_3$ | 11.44 | 13.75 |
| MgO | 0.76 | 0.97 |
| CaO | 16.88 | 23.81 |
| $B_2O_3$ | 3.18 | 5.02 |

The results indicate that the two-layer structure inorganic fibers as a whole contained 65.6 wt% of silica ($SiO_2$). This amount is more than the silica ($SiO_2$) content (54.5 wt%) of the E-glass fibers before acid treatment.

The two-layer structure inorganic fibers were then placed in an atmosphere furnace and heated at 700°C for 20 minutes. Then, a mat material was manufactured using the resultant two-layer structure inorganic fibers by the paper-making method. First, the two-layer structure inorganic fibers, an organic binder (latex), and an inorganic binder (alumina sol) were mixed with water. The resultant mixture was stirred in a mixer for 60 seconds, thereby obtaining a slurry of opened fibers. The slurry was then put into a mold having fine openings at the bottom. The water content of the slurry was suctioned via the bottom of the mold using a suction device, thereby obtaining a raw-material mat.

The resultant raw-material mat was then compressed using a pressing device and further placed in an oven, where the raw-material mat was retained at 150°C for 60 minutes, thereby obtaining the mat material according to Example 1.

(Example 2)

A mat material was manufactured by the same method as Example 1 with the exception that after the acid treatment, no heating process was performed on the two-layer structure inorganic fibers. Other conditions were the same as those of Example 1.

(Comparative Example 1)

A mat material was manufactured by the same method as in Example 1, with the exception that the E-glass fibers were not subjected to the acid treatment nor to the heating process. Namely, the mat material of Comparative Example 1 was manufactured using the E-glass fibers as is.

(Comparative Example 2)

A mat material was manufactured by the same method as in Example 1, with the exception that the acid treatment involved immersing the E-glass fibers in 1N hydrochloric acid at 60°C for 24 hours. After the acid treatment, the E-glass fibers had a single phase of silica ($SiO_2$). Thereafter, the resultant acid-treated fibers were subjected to a heating process at 700°C for 20 minutes. Other manufacturing conditions were the same as those of Example 1.

(Cycle test)

In order to determine how the retaining force of each mat material changes after a repeated application of compression/recovery load, cycle tests were performed on the samples of Example 1, Comparative Example 1, and Comparative Example 2.

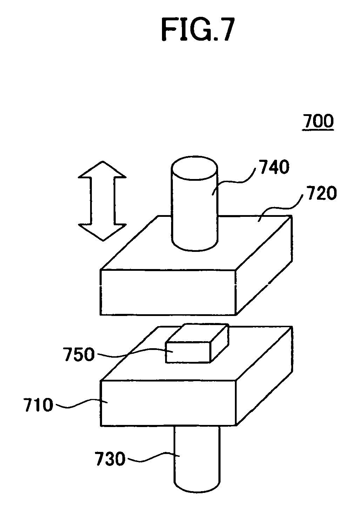

FIG. 7 illustrates a cycle testing apparatus 700 used for the cycle tests. The cycle testing apparatus 700 included a lower base 710, an upper base 720 disposed above the lower base 710, and supports 730 and 740. The lower base 710 and the upper base 720 had the same shape and dimensions, and were aligned vertically. The lower base 710 and the upper base 720 each had an internal heater (not shown) capable of raising the temperature of the lower base 710 or the upper base 720 up to a predetermined temperature. The lower base 710 was connected to the support 730 at the bottom of the lower base 710. The support 730 was of a non-movable type, and therefore the lower base 710 was also fixedly installed. On the other hand, the upper base 720 was connected to the upper support 740 at the top of the base 720. The support 740 was movable in the vertical direction, and therefore the upper base 720 was also vertically movable. The upper base 720 included a load cell capable of measuring a load applied to the bottom surface of the upper base 720 when the upper base 720 was in contact with the lower base 710.

Using the above cycle testing apparatus, changes in retaining force of a sample 750 of Example 1, and Comparative Examples 1 and 2 after repeated application of compression/recovery load were measured in the following manner. First, in the cycle testing apparatus 700, the sample 750 (56.42 mm) was placed on the upper surface of the lower base 710. Then, the support 740 was lowered, thereby lowering the upper base 720. The upper base 720 was lowered until the apparent density GBD (gap bolt density) of the sample 750 was 0.38 g/cm$^3$. The GBD was calculated by the mass of the sample 750 divided by the area of the sample 750 divided by the thickness of the sample 750.

Then, the heaters within the lower base 710 and the upper base 720 were heated to raise the temperature of the lower base 710 and the upper base 720 to 300°C and 500°C, respectively (i.e., so that the temperature of the sample 750 on its lower side is 300°C and 500°C on its upper side). During the heating process, the temperature of the upper base 720 was gradually increased, and the compression of the sample was gradually released so that the apparent density GBD of the sample was 0.35 g/cm$^3$ when the sample 750 was heated to the aforementioned predetermined temperatures.

When the temperatures of the lower base 710 and the upper base 720 reached 300°C and 500°C, respectively, the sample 750 was retained for 5 minutes while the apparent density GBD was maintained at 0.35 g/cm$^3$. Thereafter, the upper base 720 was lowered until the apparent density GBD of the sample was 0.38 g/cm$^3$, and then the upper base 720 was lifted until the apparent density GBD was 0.35 g/cm$^3$ when the load was measured using the load cell. The thus measured load was considered to be the retaining force $P_1$ (in kPa) of the sample after 1 cycle.

The above operation was repeated 1000 times. In the 1000th operation, the upper base 720 was lifted until the sample had the apparent density GBD of 0.35 g/cm$^3$ when the load $P_{1000}$ (in kPa) of the load cell was measured. The retaining force decrease rate of the sample was then calculated by the following expression:

$$\text{Retaining force decrease rate } D(\%) = \{(P_1 - P_{1000})/(P_1)\} \times 100 \qquad (1)$$

Table 2 shows the retaining force $P_1$ after 1 cycle and the retaining force $P_{1000}$ after 1000 cycles as measured by the cycle test, and the retaining force decrease rate D(%) of each sample.

Table 2

| Sample | Inorganic fiber structure | Result of | cycle test | |
|---|---|---|---|---|
| | | $P_1$ (kPa) | $P_{1000}$ (kPa) | D (%) |
| Ex.1 | 2-layer structure of E-glass core/silica-rich surface layer | 47.8 | 43.1 | 9.8 |
| Com.Ex.1 | E-glass single structure | 42.2 | 26.8 | 36.5 |
| Comp.Ex.2 | Silica single structure | 52.5 | 44.7 | 14.9 |

The results indicate that the retaining force decrease rate D(%) of the sample of Example 1 is significantly smaller than that of the samples of Comparative Examples 1 and 2.

(Effects of the heating process (for reference))

The retain/seal material that is actually used in an exhaust gas treating apparatus is exposed to various chemical components contained in the exhaust gas. Therefore, the inorganic fibers contained in the mat material preferably have a sufficient chemical resistance. From this perspective, a chemical resistance evaluation test was conducted on the two-layer structure inorganic fibers of Examples 1 and 2 for reference purposes.

The test involved immersing 1 g of the two-layer structure inorganic fibers in 3N hydrochloric acid at 90°C for 3 hours, and then measuring changes in the weight of the two-layer structure inorganic fibers before and after their immersion. In the case of the two-layer structure inorganic fibers used in Example 1, the weight decreased by 4.8%. In the case of the two-layer structure inorganic fibers used in Example 2, the weight decreased by 10.1%.

These results indicate that when the two-layer structure inorganic fibers are formed by an acid treatment of the glass fibers, improved chemical resistance can be obtained by subjecting the two-layer structure inorganic fibers to the heating process. This is presumably due to the following mechanism. The surface layer of the two-layer structure inorganic fibers immediately after the acid treatment is believed to have a number of fine pores that are formed by the removal of glass fiber constituent components other than silica ($SiO_2$) during the acid treatment. When there are a number of such pores, the areas of the two-layer structure inorganic fibers that are exposed to a chemical component such as an acid increase. As a result, the degradation of the inorganic fibers is accelerated. On the other hand, when the heating process is performed, such fine pores are eliminated, whereby the surface layer is made denser. Consequently, the areas of the two-layer structure inorganic fibers that are exposed to the chemical component decrease, thereby improving the chemical resistance of the two-layer structure inorganic fibers.

The mat material according to an embodiment of the present invention may be used as a retain/seal material for an exhaust gas treating apparatus used in an automobile and the like.

**Claims**

1. A mat material comprising a plurality of inorganic fibers (300),
   wherein at least some of the inorganic fibers include a core portion (310) and a surface layer (320), the surface layer (320) has a higher silica ($SiO_2$) content than the core portion (310),
   **characterized in that**
   the surface layer surrounds the core portion,
   wherein the surface layer (320) contains 90 wt% or more of silica ($SiO_2$).

2. The mat material according to claim 1, wherein the inorganic fibers (300) as a whole has a silica ($SiO_2$) content of 60% or more and less than 100%.

3. The mat material according to any one of claims 1 or 2, wherein the inorganic fibers (300) have an average diameter in a range from 8 $\mu$m to 12 $\mu$m.

4. The mat material according to any one of claims 1 through 3, wherein the core portion (310) includes 52 wt% to 56 wt% of silica ($SiO_2$), 12 wt% to 16 wt% of aluminum oxide ($Al_2O_3$), a maximum of 6 wt% of magnesium oxide (MgO), 5 wt% to 10 wt% of boron oxide ($B_2O_3$), and 16 wt% to 25 wt% of calcium oxide (CaO).

5. The mat material according to any one of claims 1 through 4, further comprising an organic binder.

6. An exhaust gas treating apparatus comprising:

   an exhaust gas treating body;
   a retain/seal material wound around the exhaust gas treating body; and
   a cylindrical member in which the exhaust gas treating body with the retain/seal material wound around it is housed, wherein the retain/seal material includes the mat material according to any one of claims 1 through 5.

7. The exhaust gas treating apparatus according to claim 6, wherein the exhaust gas treating body includes a catalyst carrier or an exhaust gas filter.

8. A method of manufacturing a mat material containing inorganic fibers, the method comprising the steps of:

   (A) forming the inorganic fibers having a core portion and a surface layer surrounding the core portion, the surface layer having a higher silica ($SiO_2$) content than the core portion by an acid treatment;
   **characterized in** further comprising the steps of preparing inorganic fibres containing silica ($SiO_2$) prior to step (A),
   (B) preparing a laminated sheet from the inorganic fibers formed in step (A); and
   (C) forming a mat material from the laminated sheet by a needling process,

   wherein the surface layer is caused to contain 90 wt% or more of silica ($SiO_2$).

9. The method according to claim 8, further comprising:

   (D1) heating the inorganic fibers formed in step (A) at a temperature in a range from 400°C to 800°C; or
   (D2) heating the mat material formed in step (C) at a temperature in a range from 400°C to 800°C.

10. The method according to claim 8 or 9,
    wherein the inorganic fibers used in step (B) have an average length of 50 mm to 100 mm.

11. The method according to any one of claims 8 through 10,
    wherein step (A) includes subjecting glass fibers containing silica ($SiO_2$) to an acid treatment.

12. The method according to claim 11,
    wherein the glass fibers contain 52 wt% to 56 wt% of silica ($SiO_2$), 12 wt% to 16 wt% of aluminum oxide ($Al_2O_3$), a maximum of 6 wt% of magnesium oxide (MgO), 5 wt% to 10 wt% of boron oxide ($B_2O_3$), and 16 wt% to 25 wt% of calcium oxide (CaO).

13. A method of manufacturing a mat material containing inorganic fibers, the method comprising the steps of:

    (A) forming the inorganic fibers having a core portion and a surface layer surrounding the core portion, the surface layer containing more silica ($SiO_2$) than the core portion does by an acid treatment;
    **characterized in** further comprising the steps of preparing inorganic fibres containing silica ($SiO_2$) prior to step (A),
    (B) preparing a slurry from the inorganic fibers formed in step (A); and
    (C) forming a mat material from the slurry by a paper-making method,

    wherein the surface layer is caused to contain 90 wt% or more of silica ($SiO_2$).

14. The method according to claim 13, further comprising:

(D1) heating the inorganic fibers formed in step (A) at a temperature in a range from 400°C to 800°C; or

(D2) heating the mat material formed in step (C) at a temperature in a range from 400°C to 800°C.

**15.** The method according to claim 13 or 14,
wherein the inorganic fibers used in step (B) have an average length of 3 mm to 15 mm.

**16.** The method according to any one of claims 13 through 15,
wherein step (A) includes subjecting glass fibers containing silica ($SiO_2$) to an acid treatment.

**17.** The method according to claim 16,
wherein the glass fibers contain 52 wt% to 56 wt% of silica ($SiO_2$), 12 wt% to 16 wt% of aluminum oxide ($Al_2O_3$), a maximum of 6 wt% of magnesium oxide (MgO), 5 wt% to 10 wt% of boron oxide ($B_2O_3$), and 16 wt% to 25 wt% of calcium oxide (CaO).

**Patentansprüche**

**1.** Mattenmaterial mit mehreren anorganischen Fasern (300),
wobei wenigstens einige der anorganischen Fasern einen Kernabschnitt (310) und eine Oberflächenschicht (320) aufweisen, wobei die Oberflächenschicht (320) einen höheren Siliziumdioxid-($SiO_2$)-Gehalt als der Kernabschnitt (310) hat,
**dadurch gekennzeichnet, dass**
die Oberflächenschicht den Kernabschnitt umgibt,
wobei die Oberflächenschicht (320) 90 Gewichtsprozent oder mehr Siliziumdioxid ($SiO_2$) aufweist.

**2.** Mattenmaterial nach Anspruch 1, bei dem die anorganischen Fasern (300) insgesamt einen Siliziumdioxid-($SiO_2$)-Gehalt von 60% oder mehr und weniger als 100% aufweisen.

**3.** Mattenmaterial nach einem der Ansprüche 1 oder 2, bei dem die anorganischen Fasern (300) einen durchschnittlichen Durchmesser in einem Bereich von 8 $\mu$m bis 12 $\mu$m aufweisen.

**4.** Mattenmaterial nach einem der Ansprüche 1 bis 3, bei dem der Kernabschnitt (310) zwischen 52 Gewichtsprozent und 56 Gewichtsprozent Siliziumdioxid ($SiO_2$), zwischen 12 Gewichtsprozent und 16 Gewichtsprozent Aluminiumoxid ($Al_2O_3$), maximal 6 Gewichtsprozent Magnesiumoxid (MgO), zwischen 5 Gewichtsprozent und 10 Gewichtsprozent Boroxid ($B_2O_3$) und zwischen 16 Gewichtsprozent und 25 Gewichtsprozent Kalziumoxid (CaO) aufweist.

**5.** Mattenmaterial nach einem der Ansprüche 1 bis 4, ferner mit einem organischen Bindemittel.

**6.** Abgasbehandlungsvorrichtung mit:

einem Abgasbehandlungskörper;
einem Halte-/Dichtmaterial, das um den Abgasbehandlungskörper gewickelt ist; und
einem zylindrischen Element, in dem der Abgasbehandlungskörper mit dem darum gewickelten Halte-/Dichtmaterial angeordnet ist,
wobei das Halte-/Dichtmaterial das Mattenmaterial nach einem der Ansprüche 1 bis 5 aufweist.

**7.** Behandlungsvorrichtung für Abgas nach Anspruch 6, bei dem der Abgasbehandlungskörper einen Katalysatorträger oder einen Abgasfilter aufweist.

**8.** Verfahren zum Herstellen eines Mattenmaterials, das anorganische Fasern aufweist, wobei das Verfahren als Schritte aufweist:

(A) Ausbilden der anorganischen Fasern mit einem Kernabschnitt und einer Oberflächenschicht, die den Kernabschnitt umgibt, wobei die Oberflächenschicht aufgrund einer Säurebehandlung einen höheren Siliziumdioxid-($SiO_2$)-Gehalt als der Kernabschnitt aufweist;
**dadurch gekennzeichnet, dass** es ferner als Schritte aufweist
Vorbereiten von anorganischen Fasern, die Siliziumdioxid ($SiO_2$) enthalten, vor Schritt (A),
(B) das Vorbereiten einer laminierten Bahn aus den anorganischen Fasern, die im Schritt (A) ausgebildet wurden; und

(C) Ausbilden eines Mattenmaterials aus der laminierten Bahn durch einen Nadelungsprozess,

wobei die Oberflächenschicht dazu gebracht wird, 90 Gewichtsprozent oder mehr Siliziumdioxid (SiO$_2$) aufzuweisen.

9.  Verfahren nach Anspruch 8, ferner mit:

(D1) Erhitzen der anorganischen Fasern, die in Schritt (A) ausgebildet wurden, auf eine Temperatur in einem Bereich von 400°C bis 800°C; oder
(D2) Erhitzen des Mattenmaterials, das in Schritt (C) ausgebildet wurde, auf eine Temperatur in einem Bereich von 400°C bis 800°C.

10.  Verfahren nach Anspruch 8 oder 9, bei dem die anorganischen Fasern, die in Schritt (B) benutzt werden, eine durchschnittliche Länge von 50 mm bis 100 mm aufweisen.

11.  Verfahren nach einem der Ansprüche 8 bis 10, bei dem Schritt (A) aufweist, dass Siliziumdioxid (SiO$_2$) enthaltende Glasfasern einer Säurebehandlung unterworfen werden.

12.  Verfahren nach Anspruch 11,
bei dem die Glasfasern zwischen 52 Gewichtsprozent und 56 Gewichtsprozent Siliziumdioxid (SiO$_2$), zwischen 12 Gewichtsprozent und 16 Gewichtsprozent Aluminiumoxid (Al$_2$O$_3$), maximal 6 Gewichtsprozent Magnesiumoxid (MgO), zwischen 5 Gewichtsprozent und 10 Gewichtsprozent Boroxid (B$_2$O$_3$) und zwischen 16 Gewichtsprozent und 25 Gewichtsprozent Kalziumoxid (CaO) aufweisen.

13.  Verfahren zum Herstellen eines Mattenmaterials, das anorganische Fasern aufweist, wobei das Verfahren als Schritte aufweist:

(A) Ausbilden der anorganischen Fasern, die einen Kernabschnitt und eine Oberflächenschicht, welche den Kernabschnitt umgibt, aufweisen, wobei die Oberflächenschicht aufgrund einer Säurebehandlung mehr Siliziumdioxid (SiO$_2$) als der Kernabschnitt aufweist;
**dadurch gekennzeichnet, dass** es ferner als Schritte aufweist
Vorbereiten von anorganischen Fasern, die Siliziumdioxid (SiO$_2$) enthalten, vor Schritt (A),
(B) Vorbereiten einer Suspension aus den anorganischen Fasern, die im Schritt (A) ausgebildet wurden; und
(C) Ausbilden eines Mattenmaterials aus der Suspension durch ein Papierherstellungsverfahren,

wobei die Oberflächenschicht dazu gebracht wird, 90 Gewichtsprozent oder mehr Siliziumdioxid (SiO$_2$) zu enthalten.

14.  Verfahren nach Anspruch 13, ferner mit:

(D1) Erhitzen der anorganischen Fasern, die in Schritt (A) ausgebildet wurden, auf eine Temperatur in einem Bereich zwischen 400°C und 800°C; oder
(D2) Erhitzen des Mattenmaterials, das in Schritt (C) ausgebildet wurde, auf eine Temperatur in einem Bereich von 400°C bis 800°C.

15.  Verfahren nach Anspruch 13 oder 14, bei dem die anorganischen Fasern, die in Schritt (B) benutzt werden, eine durchschnittliche Länge zwischen 3 mm und 15 mm aufweisen.

16.  Verfahren nach einem der Ansprüche 13 bis 15, bei dem Schritt (A) aufweist, dass Siliziumdioxid (SiO$_2$) enthaltende Glasfasern einer Säurebehandlung unterworfen werden.

17.  Verfahren nach Anspruch 16,
bei dem die Glasfasern zwischen 52 Gewichtsprozent und 56 Gewichtsprozent Siliziumdioxid (SiO$_2$), zwischen 12 Gewichtsprozent und 16 Gewichtsprozent Aluminiumoxid (Al$_2$O$_3$), maximal 6 Gewichtsprozent Magnesiumoxid (MgO), zwischen 5 Gewichtsprozent und 10 Gewichtsprozent Boroxid (B$_2$O$_3$) und zwischen 16 Gewichtsprozent und 25 Gewichtsprozent Kalziumoxid (CaO) aufweisen.

**Revendications**

1. Matériau en nappe comprenant une pluralité de fibres inorganiques (300), dans lequel au moins une partie des fibres inorganiques comprennent une partie d'âme (310) et une couche superficielle (320), la couche superficielle (320) a une teneur en silice ($SiO_2$) supérieure à celle de la partie d'âme (310), **caractérisé en ce que** la couche superficielle entoure la partie d'âme, dans lequel la couche superficielle (320) contient 90 % en poids ou plus de silice ($SiO_2$).

2. Matériau en nappe selon la revendication 1, dans lequel les fibres inorganiques (300) ont globalement une teneur en silice ($SiO_2$) de 60 % ou plus et inférieure à 100 %.

3. Matériau en nappe selon l'une quelconque des revendications 1 ou 2, dans lequel les fibres inorganiques (300) ont un diamètre moyen dans une plage de 8 $\mu$m à 12 $\mu$m.

4. Matériau en nappe selon l'une quelconque des revendications 1 à 3, dans lequel la partie d'âme (310) comprend 52 % en poids à 56 % en poids de silice ($SiO_2$), 12 % en poids à 16 % en poids d'oxyde d'aluminium ($Al_2O_3$), un maximum de 6 % en poids d'oxyde de magnésium (MgO), 5 % en poids à 10 % en poids d'oxyde de bore ($B_2O_3$) et 16 % en poids à 25 % en poids d'oxyde de calcium (CaO).

5. Matériau en nappe selon l'une quelconque des revendications 1 à 4, comprenant en outre un liant organique.

6. Appareil de traitement d'un gaz d'échappement comprenant :

   - un corps de traitement d'un gaz d'échappement ;
   - un matériau de maintien/étanchéité enroulé autour du corps de traitement d'un gaz d'échappement ; et
   - un élément cylindrique dans lequel est logé le corps de traitement d'un gaz d'échappement qui est enroulé du matériau de maintien/étanchéité,

   dans lequel le matériau de maintien/étanchéité comprend le matériau en nappe selon l'une quelconque des revendications 1 à 5.

7. Appareil de traitement d'un gaz d'échappement selon la revendication 6, dans lequel le corps de traitement d'un gaz d'échappement comprend un véhicule catalyseur ou un filtre à gaz d'échappement.

8. Procédé de fabrication d'un matériau en nappe contenant des fibres inorganiques, le procédé comprenant les étapes de :

   (A) formation des fibres inorganiques ayant une partie d'âme et une couche superficielle entourant la partie d'âme, la couche superficielle ayant une teneur en silice ($SiO_2$) supérieure à celle de la partie d'âme, par un traitement acide ;
   **caractérisé en ce qu'**il comprend en outre les étapes de :

   préparation des fibres inorganiques contenant de la silice ($SiO_2$) avant l'étape (A),

   (B) préparation d'une feuille stratifiée à partir des fibres inorganiques formées dans l'étape (A) ; et
   (C) formation d'un matériau en nappe à partir de la feuille stratifiée par un procédé d'aiguilletage,

   dans lequel la couche superficielle est poussée à contenir 90 % en poids ou plus de silice ($SiO_2$).

9. Procédé selon la revendication 8, comprenant en outre :

   (D1) le chauffage des fibres inorganiques formées dans l'étape (A) à une température dans la plage de 400°C à 800°C ; ou
   (D2) le chauffage du matériau en nappe formé dans l'étape (C) à une température dans la plage de 400°C à 800°C.

10. Procédé selon la revendication 8 ou 9, dans lequel les fibres inorganiques utilisées dans l'étape (B) ont une longueur moyenne de 50 mm à 100 mm.

**11.** Procédé selon l'une quelconque des revendications 8 à 10, dans lequel l'étape (A) comprend la soumission de fibres de verre contenant de la silice ($SiO_2$) à un traitement acide.

**12.** Procédé selon la revendication 11, dans lequel les fibres de verre contiennent 52 % en poids à 56 % en poids de silice ($SiO_2$), 12 % en poids à 16 % en poids d'oxyde d'aluminium ($Al_2O_3$), un maximum de 6 % en poids d'oxyde de magnésium (MgO), 5 % en poids à 10 % en poids d'oxyde de bore ($B_2O_3$) et 16 % en poids à 25 % en poids d'oxyde de calcium (CaO).

**13.** Procédé de fabrication d'un matériau en nappe contenant des fibres inorganiques, le procédé comprenant les étapes de :

(A) formation des fibres inorganiques ayant une partie d'âme et une couche superficielle entourant la partie d'âme, la couche superficielle contenant plus de silice ($SiO_2$) que la partie d'âme, par un traitement acide ; **caractérisé en ce qu'**il comprend en outre les étapes de :

préparation des fibres inorganiques contenant de la silice ($SiO_2$) avant l'étape (A),

(B) préparation d'une suspension à partir des fibres inorganiques formées dans l'étape (A) ; et
(C) formation d'un matériau en nappe à partir de la suspension par un procédé de fabrication de papier,

dans lequel la couche superficielle est poussée à contenir 90 % en poids ou plus de silice ($SiO_2$).

**14.** Procédé selon la revendication 13, comprenant en outre :

(D1) le chauffage des fibres inorganiques formées dans l'étape (A) à une température dans la plage de 400°C à 800°C ; ou
(D2) le chauffage du matériau en nappe formé dans l'étape (C) à une température dans la plage de 400°C à 800°C.

**15.** Procédé selon la revendication 13 ou 14, dans lequel les fibres inorganiques utilisées dans l'étape (B) ont une longueur moyenne de 3 mm à 15 mm.

**16.** Procédé selon l'une quelconque des revendications 13 à 15, dans lequel l'étape (A) comprend la soumission de fibres de verre contenant de la silice ($SiO_2$) à un traitement acide.

**17.** Procédé selon la revendication 16, dans lequel les fibres de verre contiennent 52 % en poids à 56 % en poids de silice ($SiO_2$), 12 % en poids à 16 % en poids d'oxyde d'aluminium ($Al_2O_3$) un maximum de 6 % en poids d'oxyde de magnésium (MgO), 5 % en poids à 10 % en poids d'oxyde de bore ($B_2O_3$) et 16 % en poids à 25 % en poids d'oxyde de calcium (CaO).

# FIG.1

EP 2 226 425 B1

FIG.2

24(30)

70(71)

50
(60)

20

12

# FIG.3

300

320

310

# FIG.4

# FIG.5

START

S110

FORM 2-LAYER STRUCTURE
INORGANIC FIBERS

S120

PREPARE LAMINATE SHEET
CONTAINING THE 2-LAYER
STRUCTURE INORGANIC FIBERS

S130

FORM MAT MATERIAL FROM THE
LAMINATE SHEET BY NEEDLING

S140

HEATING PROCESS

END

# FIG.6

START

↓

S210

FORM 2-LAYER STRUCTURE
INORGANIC FIBERS

↓

S240

HEATING PROCESS

↓

S220

PREPARE SLURRY CONTAINING
THE 2-LAYER STRUCTURE
INORGANIC FIBERS

↓

S230

FORM MAT MATERIAL
FROM THE SLURRY BY
PAPER-MAKING METHOD

↓

END

# FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006516043 A
- US 3356563 A
- EP 0186128 A
- GB 1155276 A
- GB 821362 A
- US 4063001 A
- WO 0076660 A1
- US 4933307 A